Europäisches Patentamt

European Patent Office

Office européen des brevets

(19)

(11) Veröffentlichungsnummer: **0 302 524 B1**

(12) ## EUROPÄISCHE PATENTSCHRIFT

(45) Veröffentlichungstag der Patentschrift: **11.11.92**

(21) Anmeldenummer: **88112820.1**

(22) Anmeldetag: **05.08.88**

(51) Int. Cl.5: **H02K 3/00**, H02K 49/00, H02K 15/02, H02K 1/06, F16D 27/06

(54) **Spulenträger für Elektromagnetbremsen bzw. -kupplungen.**

(30) Priorität: **07.08.87 DE 3726407**

(43) Veröffentlichungstag der Anmeldung:
**08.02.89 Patentblatt 89/06**

(45) Bekanntmachung des Hinweises auf die
Patenterteilung:
**11.11.92 Patentblatt 92/46**

(84) Benannte Vertragsstaaten:
**AT BE CH DE ES FR GB GR IT LI LU NL SE**

(56) Entgegenhaltungen:
DE-A- 2 321 918
GB-A- 2 044 867

PATENT ABSTRACTS OF JAPAN Band 1, NR
100(E77)(3126) 9 Mai 1977 & JP-A-52034303.

PATENT ABSTRACTS OF JAPAN Band 10, Nr.
61 (E(387)(2118) 11 Maerz 1986; & JP-
A-60213248.

PATENT ABSTRACTS OF JAPAN Band 4, Nr.
165 (E-34) (647) 15 November 1980; & JP-
A-55114171.

(73) Patentinhaber: **Christian Mayr GmbH & Co. KG**
**Eichenstrasse 1**
**W-8951 Mauerstetten(DE)**

(72) Erfinder: **Mayr, Fritz Dipl.-Ing. TU**
**Blütenring 89**
**W-8951 Mauerstetten(DE)**
Erfinder: **Klingler, Günter Dipl.-Ing. FH**
**Alpenstrasse 2**
**W-8939 Oberostendorf(DE)**
Erfinder: **Schilling, Karl**
**Albastrasse 4**
**W-8951 Stötten am Auerberg(DE)**

(74) Vertreter: **Ruschke, Olaf et al**
**Pienzenauerstrasse 2**
**W-8000 München 80(DE)**

EP 0 302 524 B1

## Beschreibung

Die vorliegende Erfindung betrifft einen Spulenträger für arbeits- oder ruhestrombetätigte Elektromagnetkupplungen und/oder -bremsen nach dem Oberbegriff des Patentanspruches 1.

Bekannte Elektromagnetbremsen bzw. -kupplungen weisen regelmäßig einen in etwa ringscheibenförmigen Spulenträger mit einer ringförmigen Ausnehmung in einer der Stirnflächen des Spulenträgers auf. Diese Ausnehmung ist zur Aufnahme eines ringförmigen Spulenkörpers vorgesehen. Die Auschlüsse der Spulenwicklung werden radial nach außen durch eine Bohrung in dem scheibenförmigen Spulenträger herausgeführt. Die Herstellung des Spulenträgers erfolgte bisher hauptsächlich durch die Abfolge von verschiedenen Dreh- und Bohroperationen, d.h. es handelt sich um eine Bauteil, dessen Herstellung relativ arbeitsintensiv ist. Die Befestigung des Spulenträgers der Kupplung bzw. Bremse erfolgt in der Regel durch einen auf dem Außenumfang des Spulenträgers umlaufenden Radialflansch, der mit in Axialrichtung verlaufenden Bohrungen für Befestigungsschrauben versehen war oder durch eine am Außenumfang des Spulenträgers angenietete Blechlasche mit Bohrungen für die Befestigungsschrauben. Im übrigen ist zu beachten, daß es sich bei den hier in Rede stehenden Spulenträgern für Elektromagnetbremsen um relativ massive Bauteile handelt, deren Durchmesser typischerweise in der Größenordnung von etwa 100 - 200 mm und deren Wandstärke bei 5 - 10 mm liegt. Wesentlich in diesem Zusammenhang ist auch, daß Elektromagnetbremsen bzw. -kupplungen und deren Einzelteile wie die vorliegend interessierenden Spulenträger weitgehend rotationssymmetrische Bauteile sind, die vorzugsweise als Drehteile hergestellt werden, wie dies bei den Spulenträgern für diesen speziellen Anwendungszweck tatsächlich bisher auch immer der Fall war.

Aus der US-PS 3 391 766 ist ein Spulenträger für Elektromagnetbremsen und dgl. bekannt geworden, bei dem eine Vielzahl von separaten, U-förmig gebogenen Einzelelementen aus magnetischem Material strahlenförmig um ein Zentrum herum angeordnet ist, wobei die Einzelelemente in ein Kunstharz eingegossen sind, um ein einheitliches Bauteil vorzusehen. Durch diese Ausgestaltung des Spulenträgers ergeben sich jedoch Probleme bei der Handhabung und Montage sowie in bezug auf die Festigkeit des Spulenträgers. Außerdem führt diese andersartige Fertigung nicht zu einer rationelleren Produktion.

In der US-PS 3 562 687 wird ein Magnetkern für die Spule eines Meßgerätes beschrieben. Dieser Magnetkern wird aus einem sehr dünnen Blech (ca. 0,15 mm) ausgestanzt und durch eine Biegeoperation in die endgültige Form gebracht, in der es einen Durchmesser von nicht einmal 10 mm hat, d.h. es handelt sich um ein sehr kleines Bauteil, für das eine andere Art der Fertigung kaum in Betracht kommen kann. Zudem sollen bei dieser Konstruktion die die Spule umfassenden Teile des Käfigs so dünn wie möglich gehalten sein, was dazu beitragen soll, die Meßgenauigkeit und Linearität des Meßgerätes zu erhöhen. All dies bedeutet, daß dieser Stand der Technik keine Anregung geben kannin bezug auf die anzuwendenden Konstruktionsprinzipien und die Art der Herstellung eines sehr massiven Spulenträgers für Elektromagnetbremsen, bei dem es u.a. darauf ankommt, möglichst wenig magnetischen Widerstand zu haben.

Die DE-A1-34 45 917 zeigt einen Hubmagneten mit einem rahmenförmigen Joch, das als einstückiger Magnetrahmen als Stanz-Biegeteil aus einem Blechzuschnitt hergestellt wird. Dabei entsteht ein kastenförmiger Magnetanker, der bei rotationssymmetrischen Baugruppen wie einer Elektromagnetbremse bzw. -kupplung unbrauchbar wäre. Ganz ähnlich ist die Situation bei dem Magnetjoch für Hubmagneten nach der DE-AS 1 489 622.

Es ist die der vorliegenden Erfindung zugrundeliegende Aufgabe, einen gattungsgemäßen Spulenträger für weitgehend rotationssymmetrische Baugruppen wie Elektromagnetbremsen oder -kupplungen derart konstruktiv weiterzubilden, daß er in besonders einfacher, d.h. arbeitsökonomischer Weise herstellbar ist. Dies wird durch die kennzeichnenden Merkmale des Patentanspruches 1 erreicht. Anstatt wie bei diesen Baugrößen und Anwendungszwecken bisher üblich den Spulenträger durch eine drehende Bearbeitung herzustellen und anschließend noch mit den notwendigen Bohrungen etc. zu versehen, werden erfindungsgemäß die inneren und äußeren Umfangswandungen durch Lappen ausgebildet, die am inneren bzw. äußeren Umfangsbereich eines flachen ringförmigen Blechrohlings ausgestanzt und im Rahmen des gleichen Arbeitsganges umgebogen werden, so daß diese voneinander umfangsmäßig auf Abstand stehenden, in Axialrichtung umgebogenen Lappen diejenigen Innen- bzw. Außenwandungen bilden, die die Magnetspule im Spulenträger radial fixieren. Der erfindungsgemäße Spulenträger kann also, wie dies bisher nur bei kleinen bzw. kastenförmigen Baugrößen möglich schien, nunmehr ebenfalls durch einen einfachen Stanz- und Biegevorgang sehr rasch aus einem ringförmigen flachen Rohling hergestellt werden. Dieser benötigt eine Reihe von in etwa radial verlaufenden Schlitzen auf dem inneren bzw. äußeren Umfang des Rohlings zur Ausbildung von einzelnen Lappen, die dann im Zuge der Biegeoperation senkrecht zur Ebene des flachen Blechrohlings umgebogen werden.

Wenn mindestens zwei der Lappen auf dem Außenumfang in der Radialebene der Bodenwandung verbleiben, also nicht umgebogen werden, können diese Lappen als Flanschabschnitte angesehen werden und jeweils mit einer axial ausgerichteten Befestigungsbohrung versehen werden. Diese können dann die Funktion des radialen Umfangsflansches mit den darin befindlichen Befestigungsbohrungen aus dem Stand der Technik übernehmen. Es entfällt also ein besonderer Herstellungsschritt für einen außen am Spulenträger umlaufenden radialen Befestigungsflansch.

Durch die erfindungsgemäße Ausgestaltung des Spulenträges gelingt es außerdem, die Lappen der äußeren Umfangswandung auf einem Radius anzuordnen, der dem Abstand der Befestigungsbohrungen von der Mittelachse des Spulenträgers entspricht. Da diese Befestigungsbohrungen in der Regel auf dem größten Durchmesser angeordnet sind und die äußeren Umfangswandungen des Spulenträgers nicht mehr radial einwärts davon vorgesehen sein müssen, da jetzt zwischen den einzelnen Lappen Platz für die Befestigungsschrauben ist, gelingt es bei gleichen äußeren Abmessungen der Kupplung und/oder Bremse entweder eine größere Reib- bzw. Arbeitsfläche vorzusehen und damit eine höhere Leistung zu übertragen oder bei gleicher Leistung einen geringeren Verschleiß zu erreichen.

Durch den größeren Außendurchmesser der inneren und äußeren Umfangswandungen 8 und 10 und damit des größeren mittleren Durchmessers wird mehr Drehmoment erreicht. Eine mit dem neuartigen Spulenträger versehenen Elektromagnetkupplung bzw. Bremse hat somit ein höheres Drehmoment.

Durch die einzelnen Polpaare und den Einzelspulen kann außerdem z.B. eine Bremse oder Kupplung steuerbar bzw. ein regelbares Drehmoment erreicht werden. Es wird also durch die spezielle Formgebung des Spulenträgers eine möglichst weitgehende Ausnutzung der Steuer- und Regelbarkeit bzw. günstige Schaltzeit erreicht.

Der Spulenträger is sowohl für arbeitssstrombetätigte als auch für ruhestrombetätigte Kupplungen und Bremsen zu verwenden.

Ein Ausführungsbeispiel der vorliegenden Erfindung wird nachfolgend unter Bezugnahme auf die beigefügten Zeichnungen beschrieben. Darin zeigt:

Fig. 1 bzw. 2
ein Ausführungsform des neuartigen Spulenträgers in einer Draufsicht bzw. einer Schnittansicht.
Fig. 3 bzw. 4
den neuartigen Spulenträger in einer Draufsicht und einer Schnittansicht mit der darin angeordneten Magnetspule; und
Fig. 5

eine Draufsicht auf den flachen Blechrohling, der zur Herstellung einer Ausführungsform des erfindungsgemäßen Spulenträgers verwendet wird.
Fig. 6 bzw. 7
den Spulenträger in einer Draufsicht bzw. einer Schnittansicht als eine Bremsen-Mehrspulenausaführung.
Fig. 8
ein Einbaubeispiel des erfindungsgemäßen Spulenträgers in einer Ruhestrombremse, und
Fig. 9 bzw. 10
ein Einbauspiel des erfindungsgemäßen Spulenträgers in einer Arbeitsstromkupplung in einem Axial- bzw. einem Radialschnitt.

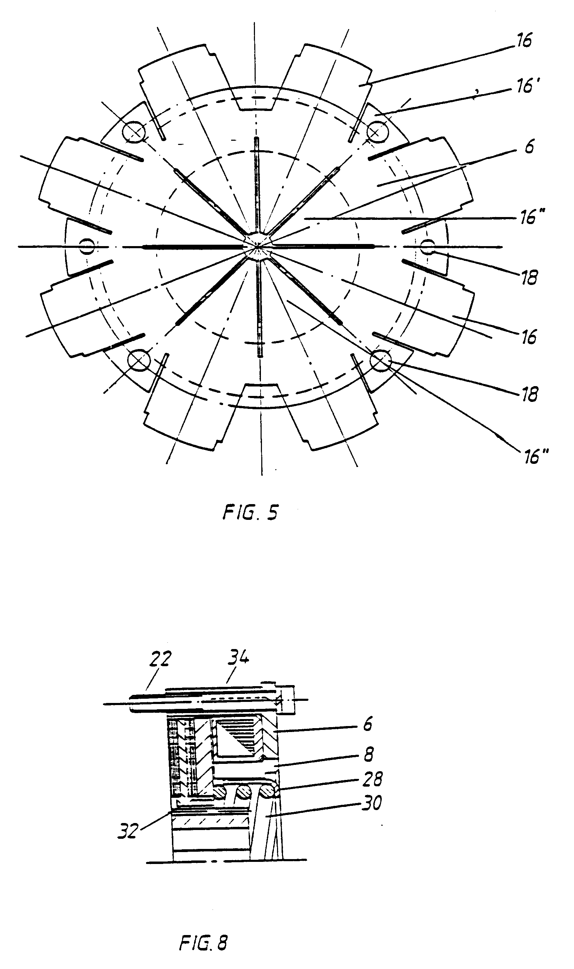

Der neuartige Spulenträger ist aus einem flachen ringscheibenförmigen Blechrohling (Fig. 5) hergestellt, an dessen innerem bzw. äußerem Umfangsbereich radial nach innen bzw. außen vorstehende Lappen 16, 16″ vorgesehen sind, die etwa entlang der gestrichelten Kreislinien in Fig. 5 aus der Zeichenebene heraus nach oben auf den Betrachter zu umgebogen sind (die Lappen 16′ werden nicht umgebogen). Damit stellen die dann in Axialrichtung verlaufenden Lappen 16, 16″ die inneren bzw. äußeren Umfangswandungen 8 bzw. 10 zur Bodenwandung 6 dar (Fig. 4) und dienen zur Aufnahme der ringförmigen Magnetspule 14, wobei sie den Innen- und Außenpol ausbilden. Mindestens zwei der Lappen 16′ verbleiben dabei in der Radialebene der Bodenwandung 6, d.h. werden nicht umgebogen und sind jeweils mit einer axial ausgerichteten Befestigungsbohrung 18 versehen, mit der der Spulenträger befestigt wird.

Die Lappen 16′ mit den Befestigungsbohrungen 18 sind jeweils in einer Lücke zwischen zwei Lappen 16 augeordnet, d.h. die die äußere Umfangswandung 10 bildenden Lappen 16 können so weit radial nach außen verlagert sein, daß der mittlere Durchmesser der äußeren Umfangswandung 10 dem Abstand der Befestigungsbohrungen 18 von der Mittelachse 2 entspricht. Damit kann der äußere Durchmesser des Spulenträgers größer als im Stand der Tehcnik gemacht werden, so daß der zu Verfügung stehende Raum besser als bisher ausgenutzt wird.

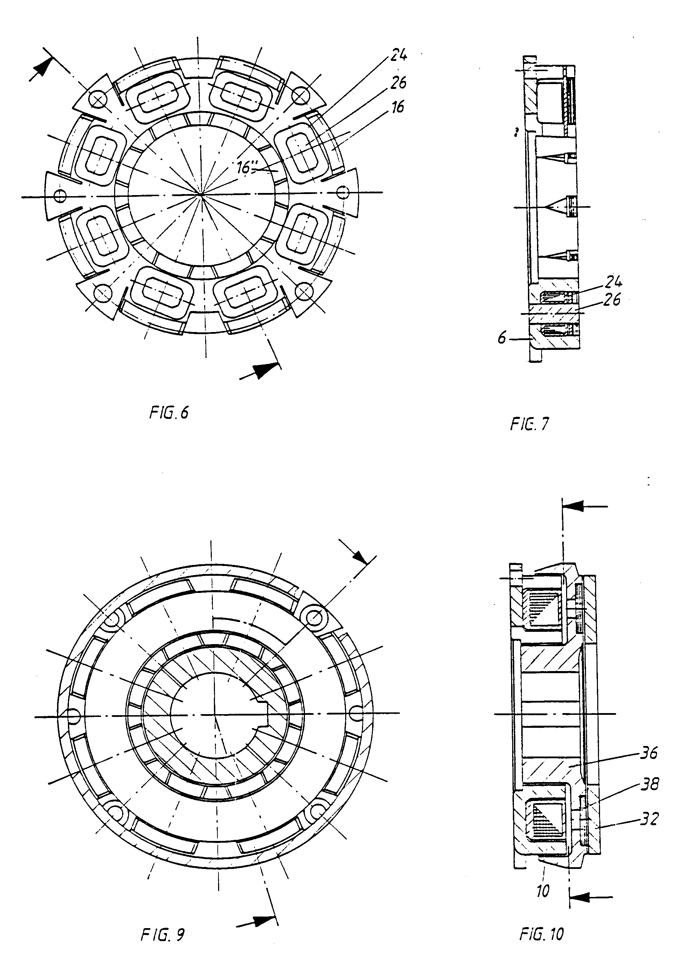

Die Fig. 6 und 7 zeigen den erfindungegemäßen Spulenträger in einer Mehrspulenausführung für eine Elektromagnetbremse. Jedem Paar aus einander gegenüberstehenden Lappen 16 bzw. 16″ ist eine Einzelspule 24 zugeordnet. Diese Einzelspulen sind separat ansteuerbar und sorgen somit für eine abgestufte Ansteuerung bzw. Betätigung der Bremse. In jeder Einzelspule ist ein Eisenkern 26 vorgesehen (Fig. 7), der in eine entsprechende Bohrung oder Öffnung in der Bodenwandung 6 des Spulenträgers eingesetzt ist und somit für einen guten magnetischen Fluß im Bereich der Einzelspulen sorgt.

In Fig. 8 ist der neuartige Spulenträger in einer Einbausituation einer Ruhestrombremse gezeigt. Die Anschraubung des Spulenträgers erfolgt nicht wie im Fall der Fig. 4 mit der Bodenwandung 6 an einer Maschinenwand, sondern über Distanzbuchsen 34 mit Zylinderschrauben 22 auf der offenen Seite des Spulenträgers. Durch diese Befestigungsart wird hier die Verwendung des gleichen Spulenträgers und der gleichen Spule wie bei einer Arbeitsstromkupplung etwa nach Fig. 9/10 möglich. An der inneren Umfangswandung 8 wird ein Blechtopf 28 eingehängt. In diesem stützt sich eine Druckfeder 30 ab, welche auf die Ankerscheibe 32 drückt und somit das Brems- bzw. Drehmoment erzeugt. Der Luftspalt wird über vier Distanzbuchsen 34 bestimmt. Sie halten auch die Ankerscheibe 32 in Umfangsrichtung.

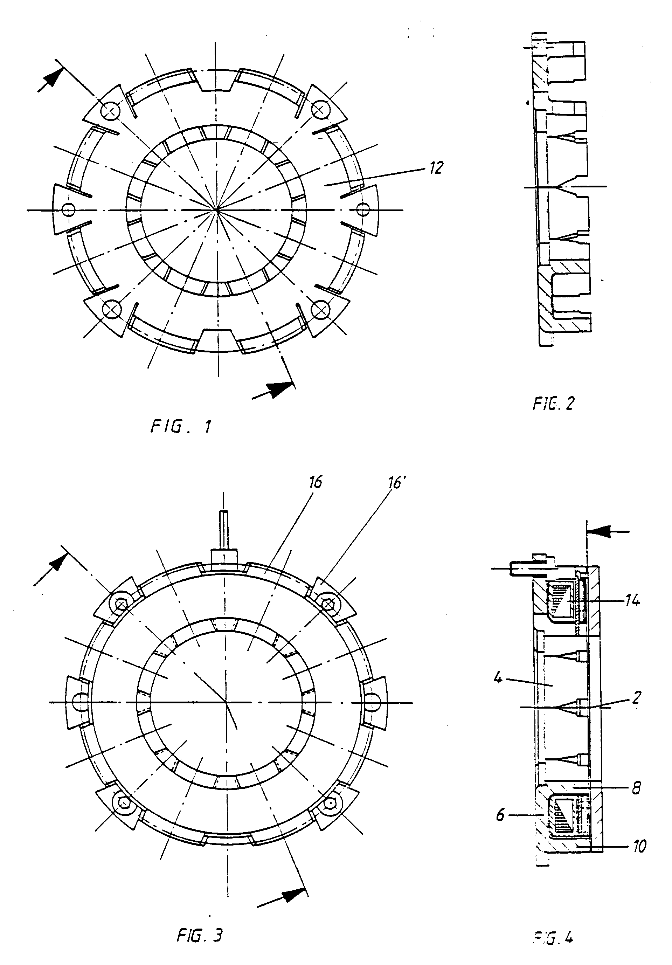

In den Fig. 9 und 10 ist der neuartige Spulenträger in einer Einbausituation einer Arbeitsstromkupplung gezeigt. Hier wird wiederum der gleiche Spulenträger wie bei der Arbeitsstrombremse verwendet. Die Art der Anschraubung ist die gleiche wie etwa in den Fig. 3 und 4, jedoch ist die in dem Spulenträger angeordnete Spule anders ausgebildet. Der Reibbelag 38 ist im Rotor 36 untergebracht. Der Magnetfluß geht über den Außendurchmesser der äußeren Umfangswandung 10 auf den Rotor 36, zur Ankerscheibe 32, zum Rotor 36, zur Ankerscheibe 32, zum Rotor 36 zurück und dann über den Innendurchmesser der inneren Umfangswandung 8 zum Spulenträger zurück.

Die Arbeitsfolge zur Herstellung des erfindungsgemäßen Spulenträgers ist etwa wie folgt: Zunächst wird aus einer Platine der Umriß eines Rohlings ausgestanzt, wie er etwa aus Fig. 5 ersichtlich ist. Als nächstes wird mit Hilfe eines Formwerkzeuges (Matrize und Patrize) ein Anschervorgang durchgeführt, und zwar werden die radial inneren und äußeren Lappen leicht angebogen und zugleich am Rand jeweils abgschert, um die in Fig. 5 bereits eingezeichneten Trennfugen auszubilden. Als nächstes werden die inneren und äußeren radial vorstehenden Lappen umgebogen, und zwar senkrecht zur Ausgangsebene. Dies gschieht mit Hilfe eines weiteren Werkzeuges. Anschließend werden die senkrecht aufragenden inneren und äußeren Lappen axial leicht gestaucht, um ihre Höhe auf ein einheitliches mäß zu bringen und zusätzliche Polfläche zu schaffen. Schließlich werden die Bohrungen in den äußeren Befestigungslappen im Zuge eines weiteren Stanzvorganges eingestanzt.

**Patentansprüche**

1. Kreisförmiger Spulenträger für arbeits- oder ruhestrombetätigte Elektromagnetkupplungen und/oder -bremsen, der konzentrisch zur Mittelachse (2) von Kupplungen bzw. Bremse angeordnet ist und eine ringscheibenförmige, eine zentrale Öffnung (4) umgebende und radial verlaufende Bodenwandung (6) sowie von dieser auf ihrem Innen- bzw. Außenumfang ausgehende, axial in einer Richtung verlaufende gekrümmte Umfangswandungen (8 bzw. 10) aufweist, die eine ringförmige, im Querschnitt U-förmige Ausnehmung (12) zur Aufnahme der Magnetspule (14) ausbilden, wobei der ganze Spulenträger einschließlich der Bodenwandung (6), und der inneren und äußeren Umfangswandungen (8, 10) einstückig aus magnetischem Material ausgebildet ist, dadurch gekennzeichnet, daß die inneren bzw. äußeren die Spule aufnehmenden Umfangswandungen (8 bzw. 10) aus umfangsmäßig voneinander auf Abstand stehenden separaten Lappen (16″, 16) gebildet sind, die aus dem inneren bzw. äußeren Umfangsbereich eines flachen ringscheibenförmigen Blechrohlings ausgestanzt und aus der Radialebene der ringscheibenförmigen Bodenwandung heraus in die eine Axialrichtung umgebogen sowie in Umfangsrichtung gekrümmt sind, wobei die Lappen (16 bzw. 16″) der äußeren (10) bzw. inneren (8) Umfangswandung einen erheblichen Teil des theoretisch möglichen Umfangswandungsbereiches ausfüllen und nach dem Umbiegen in die axiale Richtung auf die gewünschte axiale Baulänge des Spulenträgers gestaucht sind.

2. Spulenträger nach Anspruch 1, dadurch gekennzeichnet, daß mindestens zwei der Lappen (16′) auf dem Außen- oder Innenumfang in der Radialebene der Bodenwandung (6) verblieben (nicht umgebogen) und jeweils mit einer axial ausgerichteten Befestigunsbohrung (18) versehen sind.

3. Spulenträger nach Anspruch 2, dadurch gekennzeichnet, daß die Lappen (16) der äußeren Umfangswandung auf einem Radius liegen, der dem Abstand der Befestigungsbohrung(en) (18) von der Mittelachse (2) des Spulentrgers entspricht.

4. Spulenträger nach einem der obigen Ansprüche, dadurch gekennzeichnet, daß jeweils zwei einander gegenüberstehende Lappen (16 bzw. 16″) der inneren und äußeren Umfangswandungen (8 bzw. 10) zusammen ein eigenes Polpaar bilden und die Kupplung bzw. Bremse mit einer Ringspule oder mit mehreren kleinen Einzelspulen (24) entsprechend der Anzahl der Polpaare bestückt wird.

## Claims

1. Circular coil former for electromagnetic clutches and/or brakes operating on the open-circuit or closed-circuit principle, that is arranged concentrically to the central axis (2) of clutches or brakes, and which has an annular bottom wall (6) arranged radially around a central opening (4), and bent peripheral walls (8 or 10) running in an axial direction from this opening to its inner or outer periphery, which form an annular recess (12) of U-shaped cross-section to take the magnet coil (14), whereby the entire coil former, including the bottom wall (6) and the inner and outer peripheral walls (8, 10) are formed in one piece from magnetic materials, characterised in that the inner or outer peripheral walls (8 or 10) which accommodate the coil are formed from separate tabs (16", 16) arranged at intervals from each other around the periphery, which are punched out from the inner or outer periphery of a flat, annular, sheet metal blank and are bent up in an axial direction from the radial plane of the annular bottom wall around the circumference, whereby the tabs (16 or 16") of the outer (10) or inner (8) peripheral wall fill a considerable part of the theoretically possible peripheral wall area and after bending in the axial direction are upset along the desired overall axial length of the coil former.

2. Coil former according to claim 1, characterised in that at least two of the tabs (16') remain (are not bent) on the outer or inner periphery in the radial plane of the bottom wall (6) and are each provided with an axially-aligned fixing hole (18).

3. Coil former according to claim 2, characterised in that the tabs (16) of the outer peripheral wall lie on a radius that corresponds to the distance of the fixing hole(s) (18) from the central axis (2) of the coil former.

4. Coil former according to one of the above claims, characterised in that every two opposing tabs (16 or 16") of the inner or outer peripheral walls (8 or 10) together form a separate pole pair, and the clutch or the brake is fitted with a ring coil or with several small individual coils (24) corresponding to the number of pole pairs.

## Revendications

1. Porte-bobine(s) circulaire pour freins et/ou embrayages électromagnétiques actionnés par courant de travail ou de repos, ce porte-bobine(s) étant agencé concentriquement à l'axe central (2) d'un frein ou d'un embrayage et présentant une paroi de fond (6) en forme de plaque annulaire qui entoure une ouverture centrale (4) et s'étend radialement, et des parois périphériques courbées (8, 10), partant respectivement de son périmètre intérieur et de son périmètre extérieur, lesquelles s'étendent axialement dans une direction et forment un évidement annulaire (12) à section droite en U, destiné à recevoir la ou les bobine(s) magnétique(s) (14), l'ensemble du porte-bobine(s), y compris sa paroi de fond (6) et les parois périphériques (8, 10), intérieure et extérieure, étant en matière magnétique d'un seul tenant, caractérisé par le fait que les parois périphériques intérieure et extérieure (8; 10) recevant la bobine sont formées par des pattes (16", 16) périphériquement séparées les unes des autres par des intervalles, ces pattes résultant du découpage des régions périphériques intérieure et extérieure d'un flan annulaire plat en tôle et étant orientées dans une direction axiale, cela par pliage hors du plan radial de la paroi de fond en forme de plaque annulaire, ainsi que courbées en direction circonférentielle, lesdites pattes respectives (16, 16') de la paroi périphérique extérieure (10) et de la paroi périphérique intérieure (8) occupant une partie notable du domaine de paroi périphérique théoriquement possible et, après le pliage d'orientation en direction axiale, étant refoulées pour obtenir la longueur axiale désirée du porte-bobine(s).

2. Porte-bobine(s) selon revendication 1, caractérisé par le fait qu'au moins deux des pattes (16') sur la périphérie extérieure ou intérieure restent dans le plan radial de la paroi de fond (6) (ne sont pas pliées) et sont munies chacune d'un trou de fixation (18) dirigé axialement.

3. Porte-bobine(s) selon revendication 2, caractérisé par le fait que les pattes (16) de la paroi périphérique extérieure se trouvent sur un rayon qui correspond à la distance du ou des trou(s) de fixation (18) à l'axe central (2) du porte-bobine(s).

4. Porte-bobine(s) selon l'une des revendications précédentes, caractérisé par le fait que chaque couple de pattes mutuellement opposées (16; 16") des parois périphériques intérieure et extérieure (8; 10) forme une paire de pôles propre, et l'embrayage ou , selon le cas, le frein est équipé de plusieurs petites bobines individuelles (24) en correspondance avec le nombre des paires de pôles.

FIG. 1

12

FIG. 2

16   16'

FIG. 3

14

4

2

8

6

10

FIG. 4

7

FIG. 5

FIG. 8

FIG. 6

FIG. 7

FIG. 9

FIG. 10